# EUROPEAN PATENT SPECIFICATION

(11) **EP 3 359 829 B1**
(45) Date of publication and mention of the grant of the patent: **22.05.2019**
(21) Application number: 16795145.8
(22) Date of filing: 28.09.2016
(51) Int. Cl.: F16B 31/02, G01L 5/24

(54) **SCREW AND METHOD FOR READING A SCREW TIGHTENING FORCE**
SCHRAUBE UND VERFAHREN ZUM ABLESEN EINER SCHRAUBENFESTZIEHKRAFT
VIS ET MÉTHODE POUR LA LECTURE DE LA FORCE DE SERRAGE D'UNE VIS

(30) Priority: 06.10.2015 IT UB20154080
(43) Date of publication of application: 15.08.2018
(73) Proprietor: Autec S.r.l., 48034 Fusignano (RA) (IT); Fondriest, Ivan Giovanni, 47039 Savignano sul Rubicone (Forlì Cesena) (IT)
(72) Inventor: FONDRIEST, Ivan Giovanni, 47039 Savignano sul Rubicone (Forlì Cesena) (IT); BALSAMINI, Guglielmo, 48121 Ravenna (IT); BERARDI, Luca, 44011 Argenta (Ferrara) (IT)
(74) Representative: Conti, Marco
(86) International application number: PCT/IB2016/055797
(87) International publication number: WO 2017/060797

(56) References cited:
- GB-A- 946 409
- US-B1- 7 412 898
- US-B1- 8 448 520

## Description

### Technical field

This invention relates to a screw and a method for reading a screw tightening force.

### Background art

Screws are widely used as fastening means in the building construction sector. Often, the solidity and correct operation of a structure depends on the screws used in its construction and this applies also to large structures, such as aircraft and bridges, on which the lives of many people depend.

It is therefore very important to have an effective method of measuring the tightening force of a screw, making it possible to verify the dependability and correct assembly of the structure which the screws are used in. In particular, we are referring here to the static tightening force, that is to say, the force with which the screw is fastened to the structure, some time after being tightened by means of a tightening tool (for example, a spanner or other tool).

In effect, the dynamic tightening force applied at the time of screwing or tightening of the screw can be measured relatively easily using the tightening tool. The dynamic tightening force, however, does not indicate the strength of the connection provided by the screw a certain length of time after being tightened, and hence it is not a measure of the dependability of the structure because, typically, the tightening force tends to diminish over time as a result of unforeseeable factors such as, for example, thermal stress and vibrations.

The problem of providing screws whose tightening force (static) can be measured was tackled, for example, in patent documents GB946409A, TW201231831A and DE102011053150A1, US7412898B1 and US8448520B1.

In some solutions, for example the one described in GB946409A, the screw is provided with an extensometer located inside the screw. More specifically, the screw has a threaded shank and a head engaged by the tightening tool and the extensometer is fitted inside the shank of the screw to measure the tensile force the screw itself is subjected to.

These prior art solutions have some disadvantages, however.

In particular, these screws are difficult to measure and measuring is very time consuming.

Further, these screws are relatively weak on account of the machining processes they have to be subjected to.

### Disclosure of the invention

This invention has for an aim to provide a screw and a method for reading a screw tightening force which overcome the above mentioned disadvantages.

More specifically, an aim of this invention is to provide a screw which allows its state of tension (or, more generally speaking, its tightening force) to be checked in a particularly quick and easy manner. Similarly, this invention also has for an aim to provide a method for reading the tightening force of a screw, that is to say, the state of tension of the screw, and which is particularly quick and easy to apply.

A further aim of this invention is to provide a screw and a reading method which are particularly reliable and robust.

These aims are fully achieved by the screw and method of this invention as characterized in the appended claims.

This description provides a screw comprising a threaded shank extending along longitudinal axis (which also defines a longitudinal axis of the screw) and a head which can be engaged by a tightening tool for tightening the screw.

When coupled to a nut, the screw forms a bolt.

Housed inside the screw is a measuring element. The measuring element is located in a specially made cavity in the screw. Preferably, the cavity extends longitudinally.

The measuring element constitutes a sensor or a sensor component or any component capable of measuring a measurement parameter representing a tightening force of the screw, that is, the state of tension of the screw.

For example, the measuring element is an extensometer connected to the screw and located in the cavity. Preferably, the cavity is made in the shank of the screw and the extensometer is located inside the shank.

It should be noted that other positions for the extensometer are imaginable. For example, the extensometer might be located outside the screw and connected to the body of the screw (which in many cases, is not threaded up to the head). In this case, a Wheatston bridge comprising a plurality of extensometers (for example, four extensometers) might be used. There are also screws where the part near the head is tapered. In this case, the extensometer might, for example, be positioned by connecting the extensometer (or the extensometers) in the zone with the smaller diameter, on which the extensometers (or more generally, the bridge detectors or the circuits defining the sensors, or the measuring circuits) are connected (for example, glued).

The screw has a housing, designed to receive electric or electronic components (in addition to the extensometer).

In a possible embodiment, the housing is made (entirely) in the head of the screw. The housing might, however, also be made, entirely or at least partly, in the shank of the screw. It is observed that, in one embodiment, the housing extends along the axis of the screw to one end of the screw opposite to the head. This allows to arrange the extensometer (or strain gauge) or extensometers (or strain gauges) in a region of the shank of the screw proximal to said end opposite to the head. This can be useful in the case in which such end region of the screw (opposite to the head) is in use, the one subject to the highest mechanical stress.

It should be noted that the coil is located in the outermost part so that the magnetic field produced by the reading device can be concatenated in optimum manner.

The housing has an opening, that is, a passage, on a top face of the screw head, transverse to the longitudinal axis.

The screw comprises a coil located in the housing. Preferably, the coil is wound around the longitudinal axis of the screw. That way, a magnetic flux (variable over time) oriented substantially along the longitudinal axis, is concatenated with the coil loops and generates an electric current in the coil by electromagnetic induction. Similarly, an electric current circulating in the coil generates a magnetic flux oriented substantially along the longitudinal axis.

The screw also has a microprocessor mounted in the housing.

The screw also comprises a power supply mounted in the housing. The power supply is a component configured to receive and store electrical energy, at least temporarily, and configured to deliver electrical energy for powering other electronic components inside the screw.

The power supply is connected to the coil to receive electrical energy from the coil itself.

In effect, the coil is configured to define a contactless transmission line, constituting a secondary (or primary) of a transformer.

Thus, the variable magnetic field which is generated externally of the screw and which is concatenated with the coil induces a current in the coil itself which energizes the power supply through the contactless transmission line.

The power supply is connected to the microprocessor (and to the other electronic parts).

Preferably, the extensometer comprises an electrical lead which, in use, must have an electric current flowing through it. In light of this, the power supply is preferably also connected to the extensometer to electrically energize it.

Further, the microprocessor is connected to the extensometer (by means of a conditioning block) to receive the measurement parameter measured by the extensometer.

The processor is also programmed to transmit the measurement parameter (measured by the extensometer) to the outside of the screw through a wireless measurement signal.

It should be noted that the screw defines a signal transmitter under the control of the processor. This signal transmitter is configured to transmit the measurement parameter measured by the extensometer (or by any other measuring element) through the wireless measurement signal to a reading device outside the screw.

This configuration allows measuring the state of tension (tightening force) of the screw and to acquire the result of the measurement without making any electrical connection and without even touching the screw.

The possibility of powering the electronic components inside the screw by contactless transmission of electrical energy allows reducing the dimensions of the electronic components housed in the screw, avoiding the need to include a battery inside the screw. In effect, all the power supply does is receive energy from the outside through the coil and is unable to maintain a charge for long periods (hours or days). In this regard, it should be considered that the energy transmitted is used to power the electronics only for the limited time needed to measure and retransmit the data.

This makes the screw particularly robust.

It should be noted that the power supply of the screw has a first and a second operating configuration, detectable by the microprocessor.

The power supply is in the first operating configuration when current, induced by a magnetic field, is flowing in its coil. In the first operating configuration, the power supply receives electrical energy from the outside.

The power supply is in the second operating configuration when no current, induced by magnetic fields, is flowing in its coil. In the second operating configuration, the power supply does not receive electrical energy from the outside.

The microprocessor is programmed to read the value of the tightening force and to transmit the wireless measurement signal in response to a switch of the power supply from the second to the first operating configuration.

In other words, a switch of the power supply from the second to the first operating configuration activates reading of the measurement parameter by the microprocessor.

This prevents wasting energy because the electronics of the screw absorb energy only when required, that is, when the state of tension of the screw needs to be checked.

Preferably, the microprocessor is programmed to read the tightening force value when the power supply is in the first operating configuration. Also, preferably the microprocessor is programmed to transmit the wireless measurement signal when the power supply is in the second operating configuration.

In other words, a switch of the power supply from the first to the second operating configuration activates the procedure for transmitting the data acquired during the period of the first configuration. During the first configuration, the microprocessor preferably acquires a plurality of measurements and calculates their average so as to improve precision. Preferably, the duration of the first configuration is greater than the duration of the second configuration. That is because in the second configuration there is a drop in the available energy since the electronics (at least in one of the embodiments) use only the energy previously accumulated.

As regards the transmission of electrical energy to the power supply of the screw through the coil, it should be noted that the screw preferably comprises a capacitor connected in parallel to the coil to define therewith a resonant circuit at a predetermined frequency.

This makes the transfer of electrical energy particularly efficient.

To reduce the space occupied by the electronics, the coil is preferably a coil printed on a multilayer substrate.

Preferably, the power supply and the microprocessor are integrated in an electronic card located in the housing. In one example embodiment, the electronic card is located between the coil and the extensometer, along the longitudinal axis. In another example embodiment, the electronic card is located inside the coil.

The coil preferably faces the opening of the housing (this reduces magnetic flux loss).

In a possible embodiment, the coil might be integrated in the selfsame electronic card comprising the microprocessor and the power supply, thus forming a single printed circuit. This would allow reducing the dimensions and lowering the production costs of the electronics of the screw.

In an example embodiment, the screw comprises a conditioning module, located in the housing and interposed between the extensometer and the microprocessor.

The conditioning module comprises other fixed value resistors, cooperating with the extensometer to define a bridge detector, for example a Wheatstone bridge, thus defining a sensor.

The conditioning module also comprises an amplifier stage, interposed between the sensor and the microprocessor. The function of this amplifier stage is to amplify the signal detected by the sensor.

This allows the measurement parameter to be measured in a particularly robust and precise manner.

As regards the generation of the wireless measurement signal, attention is drawn to the following.

The microprocessor is programmed to generate a drive signal to drive the transmitter.

In an example embodiment, the wireless measurement signal is transmitted through the same coil of the screw as used for power supply, preferably by means of the aforementioned resonant circuit at the predetermined frequency.

In this case, the transmitter cooperates with the power supply to generate in the coil, in response to the drive signal received from the microprocessor, a transmission current which is variable according to a curve representing the measurement parameter measured, in order to generate the wireless measurement signal by electromagnetic induction through the coil.

In this case, the same contactless transmission line is used to transfer electrical energy from the outside (from the reading device) to the screw and to transfer an information content (data relating to the measurement parameter or to other parameters representing a physical state of the screw) from the screw to the outside (to the reading device) according to an alternating power/data flow.

Thus, the microprocessor mounted on the screw is programmed to activate the transmission of the measurement signal in response to an interruption in the delivery of power to the power supply through the coil.

In another example embodiment, the transmitter mounted on the screw might comprise a radiofrequency transmitter element or other transmitter element independent of the coil.

In this case, the microprocessor is programmed to manage simultaneously a flow of electrical energy into the (power supply of the) screw through the coil and a flow of data out of the screw through the transmitter.

As regards the power supply, it should be noted that in an example embodiment, it comprises a first power supply element, connected to the coil to receive a first supply current and connected to the microprocessor to power it, and a second power supply element, connected to the coil to receive a second supply current, distinct from the first supply current, and connected to the transmitter to power it. In this case, the first power supply is the one which has the aforementioned first and second operating configurations detectable by the microprocessor.

This allows separately powering the transmitter and the circuits responsible for measuring the measurement parameter (for example, conditioning module and extensometer).

More specifically, in the example embodiment where the screw uses the contactless transmission line defined by the coil to transmit the measurement signal, the screw comprises a changeover switch interposed between the second power supply element and controlled by the microprocessor by means of the drive signal. The changeover switch cooperates with the second power supply element and with the coil to define the transmitter. The microprocessor is programmed to drive the changeover switch to transmit to the coil a transmission current which is variable according to a curve representing the measurement parameter measured, in order to generate the wireless measurement signal by electromagnetic induction through the coil.

Preferably, the changeover switch is movable, as a function of the drive signal, between a first operating state, in which it connects the coil to the second power supply element; a second operating state in which it connects the coil to earth; and a third operating state in which it disconnects the coil both from the second power supply element and from earth and leaves it floating to receive energy.

The microprocessor is programmed to move the changeover switch between the second and third operating state to generate a variable transmission current (for example, square wave at the predetermined resonance frequency) in the coil. The microprocessor is also programmed to set (and keep) the changeover switch in the third operating state, when the coil transmits electrical energy to the first power supply element (which is in the first operating configuration).

This description also provides a (wireless) system for reading a tightening force of a screw applied to a structure.

The screw comprises, as described above, the measuring element (extensometer or other), the coil, the power supply, the microprocessor and the transmitter.

The system also comprises a reading device.

The reading device comprises a receiver, an electrical energy source, a processor and a winding.

The processor (of the reading device) is programmed to generate a primary supply current in the winding, to produce a magnetic field and induce a secondary supply current in the coil of the screw, when the winding of the reading device and the coil of the screw are close together (to be magnetically coupled).

That way, the reading device transmits electrical energy to the power supply of the screw through the contactless transmission line.

In practice, therefore, the reading device acts as an electrical power source for the screw, which does not have its own electrical power source. The receiver is configured to detect the wireless measurement signal generated by the microprocessor of the screw (in conjunction with the transmitter of the screw). The processor of the reading device is programmed to process the wireless measurement signal to acquire the measurement parameter.

Preferably, the reading device has a tubular protruding portion, at one end of which the winding is located, so that a current flowing in the winding generates a magnetic flux directed along a longitudinal axis of the winding, alignable with the longitudinal axis of the screw.

In this regard, it should be noted that the reading device preferably has a handgrip portion by which the reading device can be held and positioned to orient the winding correctly.

The reading device is also provided with a pushbutton or other control means to activate the flow of current in the winding to start the reading process.

Thus, this description also provides a method for reading a tightening force (that is, a state of tension) of a screw applied to a structure. The reading is a static reading, that is to say, taken after the screw has been tightened or screwed into the structure. In practice, the reading can be taken at any time, even a very long time, after the screw has been tightened.

The method comprises a step of measuring a measurement parameter representing the tightening force of the screw (that is, the state of the tension of the screw) by means of an extensometer or other measuring element housed in a cavity (for example, a longitudinal one) made in the screw (for example, in the shank of the screw).

The method also comprises a step of preparing a reading device. The reading device has a receiver, an electrical energy source, a processor and an electrical winding.

The method also comprises a step of preparing a coil, a power supply, a microprocessor and a transmitter, all located in a housing made in the screw (for example in the head of the screw).

The method comprises a step of positioning the reading device and the screw relative to each other to allow the winding of the reading device and the coil of the screw to be magnetically coupled (to define the primary and secondary of a transformer). In practice, this step entails moving the reading device close to the screw until the winding of the reading device is magnetically coupled to the coil of the screw.

This is followed by a step of electrically energizing the power supply and the microprocessor of the screw by transmitting electrical energy from the reading device through the contactless transmission line defined by the winding of the reading device magnetically coupled to the coil of the screw. In the next step, the microprocessor of the screw acquires the measurement parameter measured by the extensometer.

Next, there is a step of transmitting the measurement parameter to the receiver of the reading device by the microprocessor of the screw through a wireless measurement signal.

The wireless measurement signal is received and processed by the processor of the reading device to acquire the measurement parameter and make it available to the user of the reading device.

Preferably, the step of acquiring the measurement parameter measured by the extensometer is started by the microprocessor of the screw when the microprocessor detects the electrical powering step. Detection occurs, for example, by sensing the changeover of the power supply (or of the first power supply element) from the first to the second operating configuration. As regards the step of transmitting the measurement parameter through the wireless measurement signal from the microprocessor of the screw to the reading device, at least two embodiments are imaginable.

In a first embodiment, the measurement parameter (that is, the measurement signal) is transmitted through the same contactless transmission line defined by the winding of the reading device magnetically coupled to the coil of the screw (and also used for powering the screw) during a pause in the step of electrically energizing the power supply and the microprocessor by means of the reading device.

In a second embodiment, the measurement parameter (that is, the measurement signal) is transmitted through a further contactless transmission line (distinct from and independent of the contactless transmission line used for powering the electronics of the screw) at least partly concurrently with the step of electrically energizing the power supply and the microprocessor by means of the reading device.

It should be noted that this description also provides a method for processing a screw so that a tightening force (that is a state of tension) of the screw can be read at any time after the screw has been applied to a structure.

The method comprises a step of inserting and stably connecting an extensometer, designed to measure a measurement parameter representing a tightening force of the screw, in a cavity inside the screw; for example, in a longitudinal cavity made in the shank of the screw.

The method also comprises making a housing in the screw (in addition to the cavity for the extensometer) in which the electrical and electronic components can be housed.

For example, the housing can be made by removing material, for example from the head of the screw.

Preferably, the housing is accessible longitudinally from the outside from a direction opposite the shank. In other words, the housing is made in the top of the screw head.

The method comprises placing the coil, the power supply, the transmitter and the microprocessor inside the housing. In practice, an electronic card, which integrates power supply, transmitter and microprocessor, and the coil (which might also be integrated in the card because it is preferably printed on a multilayer substrate) are placed in the housing.

The method comprises a step of electrically interconnecting the electrical and electronic components present on the screw. More specifically, the coil is electrically connected to the power supply, the power supply to the microprocessor and to the extensometer and the microprocessor to the extensometer.

The method also comprises a step of programming the microprocessor. More specifically, the microprocessor is programmed with instructions configured to transmit the measurement parameter to the outside of the screw through a wireless measurement signal (by driving the transmitter). It should be noted that this description also provides a reading device for wirelessly reading a tightening force of a screw applied to a structure.

The reading device comprises a receiver, an electrical energy source, a processor and a winding according to one or more of the aspects described in this description.

With regard to the electrical energy source, the reading device comprises a battery and/or a power supply unit connectable to an electrical energy distribution network.

### Brief description of drawings

These and other features of the invention will become more apparent from the following detailed description of a preferred, non-limiting embodiment of it, with reference to the accompanying drawings, in which:

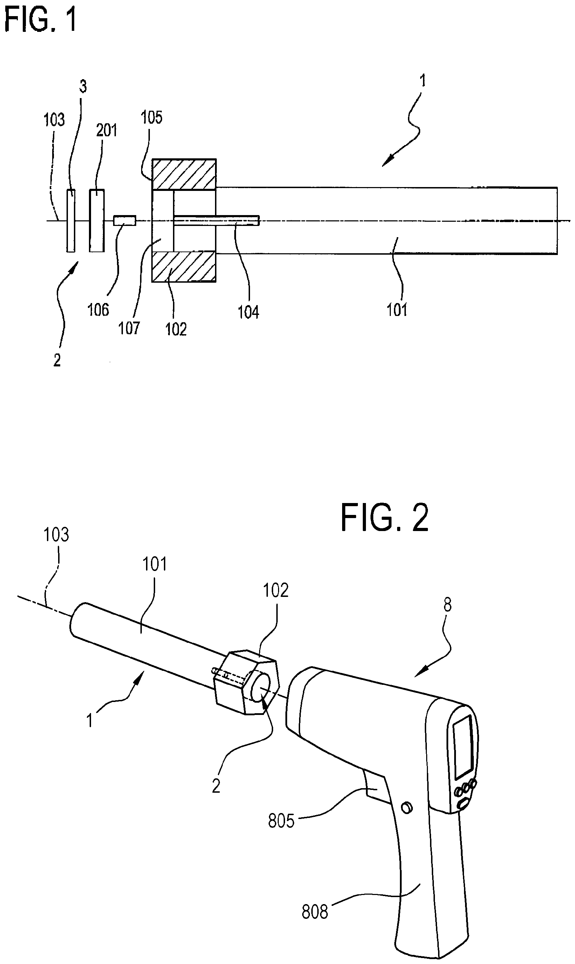

- Figure 1 shows a screw according to the invention in an exploded view partly in cross section;
- Figure 2 shows a system for reading a tightening force of a screw, comprising the screw of Figure 1 and a reading device;

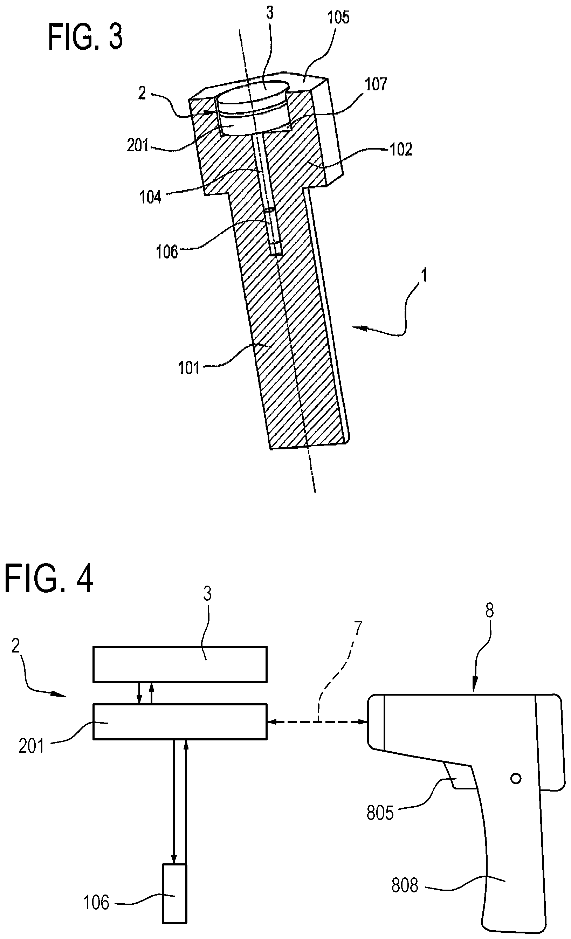

- Figure 3 illustrates the screw of Figure 1 in a cross section through a longitudinal plane;
- Figure 4 shows the system of Figure 2, schematically illustrating a measuring circuit of the screw;

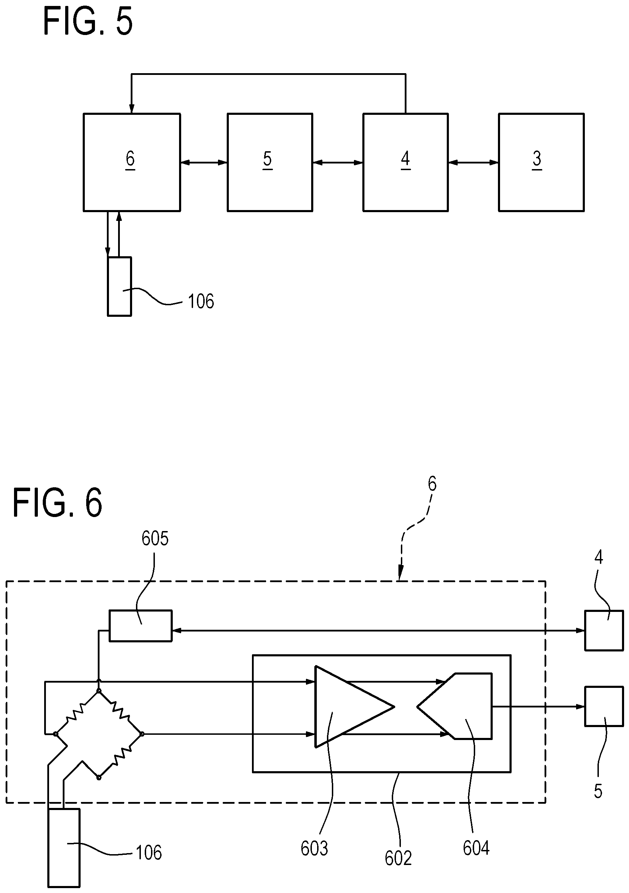

- Figure 5 shows the measuring circuit of Figure 4 in more detail;
- Figure 6 shows a functional diagram of a conditioning unit forming part of the circuit of Figure 5;

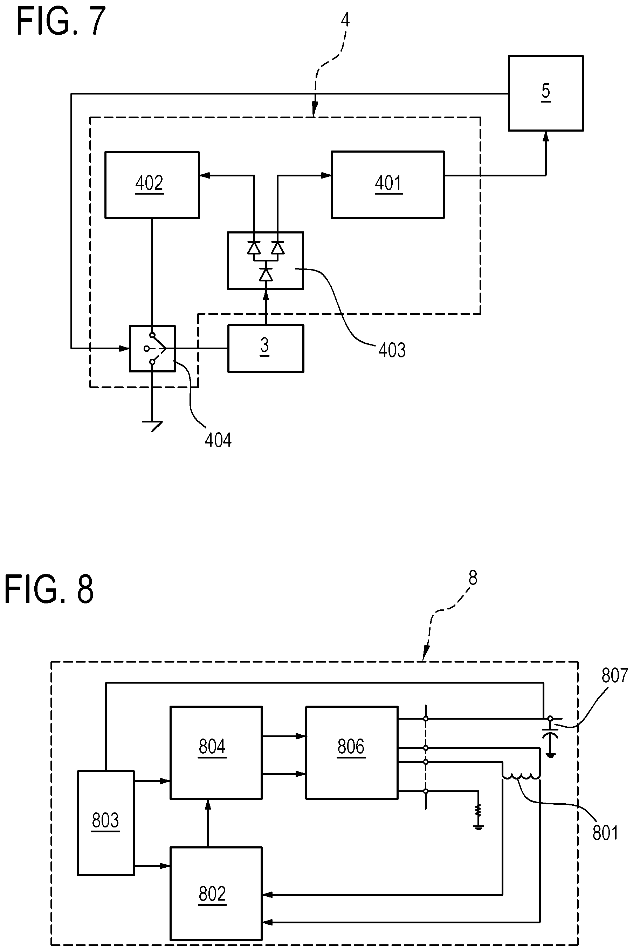

- Figure 7 shows a functional diagram of a power supply forming part of the circuit of Figure 5;
- Figure 8 shows a functional diagram of the reading device of Figure 2.

### Detailed description of preferred embodiments of the invention

The numeral 1 in the drawings denotes a screw according to this invention.

The screw 1 has a shank 101 and a head 102. The shank 101 is threaded.

The head 102 is designed to be engaged by a tightening (or screwing) tool such as, for example, a spanner, pliers or other tool.

It should be noted that the screw 1 constitutes a bolt (when coupled to a nut) and this description of a screw also applies to a bolt.

The screw 1 defines a longitudinal axis 103.

The shank 101 is elongate and extends along the longitudinal axis 103.

The screw internally defines a cavity 104. Preferably, the cavity 104 is elongate and extends in the longitudinal direction (parallel to the longitudinal axis 103). Preferably, the cavity 104 is positioned along the longitudinal axis 103.

In the example illustrated, the cavity 104 is accessible from the top 105 of the head 102, the top 105 constituting an end of the screw 1 opposite the shank 101.

Preferably, the cavity 104 extends at least partly inside the shank 101. The screw 1 comprises a measuring element configured to measure a measurement parameter representing a state of tension of the screw (and hence representing a tightening force of the screw).

The measuring element is located in the cavity 104. Preferably, the measuring element is an extensometer 106. Hereinafter in this description, and without losing in generality, reference is made to the extensometer 106.

The extensometer 106 is connected (for example, glued) to the body of the screw and is configured to vary its length as a function of the length of the screw 1, with reference, in particular, to the shank 101 of the screw 1. Preferably, therefore, the extensometer 106 is located in the cavity 105 inside the shank 101 of the screw 1.

According to technology of essentially known type, the extensometer 106 is configured to generate an electrical signal representing its elongation, or length, when current passes through it. For example, the extensometer 106 comprises an electrical lead wire having a longitudinal extension whose resistance varies as a function of the length of the extensometer itself and hence of the screw it is fixed to.

The screw 1 defines a housing 107. For example, the housing 107 consists of a blind hole accessible from the outside of the screw.

The housing 107 (or at least part of it) is preferably made in the head 102 of the screw 1.

In an example embodiment, the housing 107 is located along the longitudinal axis 103. Preferably, the housing 107 is longitudinally aligned with the cavity 104 and hence defines an extension of the cavity 104 as far as the top 105 of the head 102 of the screw 1.

The screw 1 also comprises a measuring unit 2, located inside the screw and connected thereto. The measuring unit 2 is preferably located in the housing 107.

The measuring unit 2 comprises a coil 3. The coil 3 is adapted to generate a magnetic field when an electric current passes through it. The coil 3 defines at least one loop, preferably a plurality of loops.

It should be noted that the extensometer 106 is functionally part of the measuring unit 2.

Preferably, the coil 3 is located in the housing 107 and is wound around the longitudinal axis 103.

In an example embodiment, the coil 3 is preferably a coil printed on a multilayer substrate.

The measuring unit 2 also comprises a power supply 4. The power supply 4 is an electronic unit designed to receive electrical energy, store it temporarily and release it to feed a load.

It should be noted that the screw 1 does not comprise batteries or other devices for generating electrical energy for long periods without in turn being fed.

The power supply 4 is configured to store electrical energy and to feed the load, without itself being fed, for a certain time interval, where the time interval is preferably not greater than (i.e., is less than) 500 ms; more preferably, not greater than 100 ms (so as to limit the dimensions of the power supply). It should also be noted that the power supply 4 is configured to deliver a current which is, preferably, greater than 5 mA, and more preferably, greater than 7 mA. For example, the current delivered is between 7 and 8 mA.

The measuring unit 2 also comprises a microprocessor 5.

Preferably, the microprocessor 5 has a memory. The microprocessor might also be made using Field Programmable Gate Arrays (FPGA) or similar technologies which perform the same functions repetitively. In an example embodiment, the microprocessor has a first, a second and a third memory. The first memory is a flash memory containing a work program - that is to say, the sequence of instructions it must perform when energized. The second memory is a RAM configured to perform processes at high speed. The third memory is a memory in which to load the data that may be necessary during processing (for example an EEPROM). Like the first memory, the third memory stores data even when the microprocessor is switched off (non-volatile memory). For example, the third memory contains a sequence number which identifies the production batch, readable together with the mechanical tension value, the nominal tension value which the screw can be subjected to, and if necessary, recommended maximum and minimum values which, when measured, may advise the operator to take steps to restore the correct value or even substitute the screw.

The measuring unit 2 also defines a transmitter. The transmitter is an assembly of electric or electronic components configured to generate a wireless signal and to transmit the wireless signal to the outside of the screw 1.

In an example embodiment, the power supply 4 and the microprocessor 5 (and the transmitter) are integrated in an electronic card 201.

Preferably, the electronic card 201 is a multilayer card, with components mounted on both sides of it (top and underside).

In one embodiment, the coil 3 might also be integrated in the electronic card 201.

The electronic card 201 is located in the housing 107. Preferably, the electronic card 201 is located under or inside the coil 3. The coil 3 is located in the housing 107 at the end of the screw 1 (that is, at the top 105 of the head 102).

Thus, the power supply 4, the microprocessor 5 and the transmitter are located in the housing 107.

The power supply 4 is connected to the coil 3 to receive electrical energy (from the coil 3) by electromagnetic induction through a contactless transmission line 7.

The power supply 4 is also connected to the microprocessor 5 to supply it with electric power.

Preferably, the power supply 4 is also connected to the extensometer 106 to electrically energize it.

The microprocessor 5 is connected to the extensometer 106 to receive the measurement parameter measured by the extensometer 106.

The microprocessor 5 is also connected to the transmitter to transmit the measurement parameter to the outside of the screw through a wireless measurement signal.

The screw 1 also comprises a conditioning module 6. The conditioning module 6 is an electronic appliance or an assembly of electronic components configured to process and/or condition a signal.

The conditioning module 6 forms part of the measuring unit 2 and, preferably, is integrated in the electronic card 201.

The conditioning module 6 is located in the housing 107.

From the a functional viewpoint, that is, in terms of electrical connection, the conditioning module 6 is (operatively) interposed between the extensometer 106 and the microprocessor 5.

The conditioning module 6 has a circuit (which defines a sensor, that is, a detector means) acting in conjunction with the extensometer 106 to measure the measurement parameter. In an example embodiment, the circuit is a bridge detector 601 of which the extensometer 106 is one side. Preferably, the bridge detector 601 is a Wheatston bridge.

The conditioning module 6 also has an amplifier stage 602, interposed between the sensor (in the example described above, the bridge detector 601) and the microprocessor 5.

In an example embodiment, the amplifier stage 602 of the conditioning module 6 comprises an amplifying element 603 (for example, a variable gain amplifier) designed to amplify an analogue signal, and an analogue-to-digital converter 604.

The numeral 605 in the drawings denotes a voltage regulator or stabilizer. As regards the power supply 4, attention is also drawn to the following.

In an example embodiment, the power supply 4 comprises a capacitor (not illustrated) connected to the coil 3 to define therewith a resonant circuit at a predetermined frequency. Preferably, the capacitor is connected to the coil 3 in parallel (to define a parallel resonant circuit).

In an example embodiment, the power supply 4 comprises a first power supply element 401 and a second power supply element 402. The first power supply element 401 and the second power supply element 402 are electrically connected in parallel and are designed to operate independently of one another.

The first power supply element 401 is connected to the coil 3 to receive a first supply current. The first power supply element 401 is connected to the microprocessor 5 to supply it with electric power.

The second power supply element 402 is connected to the coil 3 to receive a second supply current. Preferably, the second supply current is distinct from the first supply current. In an example embodiment, the coil 3 is connected to the first power supply element 401 and to the second power supply element 402 through a (current) divider element 403, for example a diode divider.

In an example embodiment, the second power supply element 402 is connected to the coil 3 through a changeover switch 404. The changeover switch 404 is designed to generate a square wave to be fed to the coil 3. The changeover switch 404 cooperates with the second power supply element 402 to define the transmitter. In effect, the function of the changeover switch 404 is to generate and cause to circulate in (or transmit to) the coil 3 a variable transmission current (for example, a square wave). The transmission current is variable according to a curve representing the measurement parameter measured, in order to generate the wireless measurement signal by electromagnetic induction through the coil.

The transmission current curve generated by the changeover switch 404 is determined by a drive current generated by the microprocessor 5 and transmitted to the changeover switch 404 itself.

In effect, the microprocessor 5 is connected to the changeover switch 404 to drive it through the drive signal.

In the embodiment illustrated, therefore, the power supply 4, the processor 5 and the coil 3 together define the transmitter. Alternatively (or in addition), the measuring unit 2 (or the screw 1) might comprise a transmitter which is independent of the coil 3 - for example, a radio frequency transmitter of essentially known type.

More in general, several technical solutions can be adopted to transmit the measuring signal from the measuring unit 2 of the screw 1 to the outside. In one possible solution, optical transmission (an optical transmitter) is used. Such a system might, however, prove sensitive to dirt and grime, such as dust and oil, for example.

Another possible solution involves using an electromagnetic wave transmitter on frequencies typical of RFID, such as 13.6 MHz, or even higher frequencies such as industrial scientific medical (ISM) bands, such as, for example, 433 MHz, 868 MHz, 2,4 GHz (band centre values given by way of example).

Returning to the solution where the coil 3 is used both to energize the measuring unit 2 and to transfer the measurement signal, attention is also drawn to the following.

The power supply 4 has a first and a second operating configuration, depending on whether or not it receives electric power from the outside. In other words, the power supply 4 is in the first operating configuration when current is flowing in the coil 3 (induced by a magnetic field) and in the second operating configuration when there are no currents induced by magnetic fields in the coil 3.

The microprocessor 5 is configured to detect - that is, sense - the operating configuration of the power supply 4. The microprocessor 5 is programmed to read the measurement parameter (and hence to then transmit the wireless measurement signal) in response to a switch of the power supply from the second to the first operating configuration.

In practice, the power supply 4 defines a control circuit of the coil 3. This control circuit of the coil 3 is configured to receive (during a procedure for reading the measurement parameter of the screw 1) outside-induced electrical energy, in particular induced by a reading device 8, through a magnetic field which is coupled with the coil 3.

At predetermined intervals, energy transmission is purposely interrupted so that the screw with the stored energy can transmit the measurement parameter back.

The microprocessor 5 of the screw 1 thus detects, or senses, a condition in which the supply voltage present in the power supply 4 decreases, thereby inferring that the reading device 8, at that moment, is no longer transmitting energy. After a certain length of time, also predetermined, the screw 1 sends back the measurement signal representing the mechanical tension the screw is subjected to.

The energy from the coil 3 reaches two separate capacitors (that is, the first and second power supply elements 401 and 402, which constitute two separate energy stores) which are charged independently. When the power supply from the reading device 8 is interrupted, digital controls (for example, mosfet switches) configured to generate the drive signal of the changeover switch 404 enable the microprocessor 5 to detect the changeover to the coil 3 of the energy accumulated in the second power supply element 402 in order to transmit the measurement signal through the coil 3. In this example embodiment, therefore, the screw 1 causes the measurement parameter to be transmitted to the outside (to the reading device 8) in digital format (current pulses on the coil 3 which generate a magnetic field concatenated with a winding 801 of the reading device 8). This guarantees energy for the microprocessor during transmission of the measurement signal, which in any case causes a progressive drop in the energy accumulated in the second power supply element 402 and allows the same wireless transmission line 7 to be used both to energize the measuring unit 2 of the screw 1 and to transmit the measurement signal from the screw 1 to the outside.

The changeover switch 404 is shown schematically as a single switch but consists preferably of a plurality of switches, for example mosfet transistors.

Whatever the case, the changeover switch 404 is preferably movable, as a function of the drive signal, between a first operating state, in which it connects the coil to the second power supply element, a second operating state, in which it connects the coil to earth, and a third operating state, in which it disconnects the coil both from the second power supply element and from earth and leaves it floating. In the step of energizing the measuring unit 2 from the outside, the changeover switch 404 is kept in the third operating state by the processor 5. The first two operating states, on the other hand, are used to generate the square wave signal to be made to circulate in the coil in order to generate the measurement signal to be transmitted.

This description thus also provides a wireless system for reading a tightening force of a screw 1 applied to a structure and comprising the screw 1 and the reading device 8.

This description therefore also provides the reading device 8, for which protection independent of the screw 1 is claimed.

The reading device 8 comprises the winding 801, configured to generate a magnetic field when a current flows through it. In parallel (or, alternatively, in series) with the winding 801 there is a capacitor 807, configured to define with the winding 801 a resonant circuit at the predetermined frequency.

The reading device 8 also comprises a receiver 802, an electrical energy source 803 and a processor 804.

The processor 804 is programmed to generate a primary supply current in the winding 801 to generate a magnetic field and induce a secondary supply current in the coil 3 of the screw 1. That way, electrical energy can be transmitted to the power supply 4 of the screw 1 through the contactless transmission line 7. In an example embodiment, the transfer of energy occurs through a generator element 806 connected to and interposed between, the processor 804 and the winding 801. For example, the generator element 806 is an "H" bridge (DMOS Full Bridge). The "H" bridge, suitably controlled by the processor 804, sends an alternating current to the winding 801 of the coil 3 of the screw, at the predetermined resonance frequency.

The receiver 802 is configured to detect the wireless measurement signal generated by the microprocessor 5 of the screw 1. The processor 804 is programmed to process the wireless measurement signal to acquire the measurement parameter.

The reading device 8 also comprises a memory to store the data acquired (through the receiver 802 and the processor 804).

In an example embodiment, the reading device 8 also comprises a pushbutton 805 connected to the processor 804 to manually control the power supply of the winding 801.

Preferably, the reading device 8 has a handgrip 808 which can be held by the user in one hand in order to manipulate and direct the reading device 8. Preferably, the pushbutton 805 is located at a positon where it can be pressed using the same hand as that holding the handgrip 808.

The reading device 8 preferably also has a display screen 807 on which the data acquired is displayed.

This description also provides a method for reading a tightening force (that is, a state of tension, or tensile tension) of a screw applied to a structure. Operatively, the method comprises the following steps.

A reading device 8 is positioned with a portion of it aligned with the longitudinal axis 103 of the screw 1. More specifically, the reading device 8 is positioned with its winding 801 facing the coil 3 of the screw 1 (and coaxial with the longitudinal axis 103 of the screw 1).

The reading device 8 is activated (for example by pressing the pushbutton 805) to generate a current circulating in the winding 801. Preferably, this current circulates in a resonant circuit defined by the winding 801. The current is variable (for example, square wave current) preferably at the resonance frequency of the resonant circuit.

The current circulating in the winding 801 of the reading device 8 thus induces, by magnetic coupling, a corresponding current in the coil 3 of the screw, thereby feeding the power supply 4 of the screw 1.

This causes the power supply 4 to change over from the second to the first operating configuration.

The processor 5 of the screw is fed by the power supply 4. Also, preferably, the processor 5 senses that the power supply 4 has changed over from the second to the first operating configuration.

In an example embodiment, the conditioning module 6 is also fed by the power supply 4 and current is made to flow through the extensometer 106 (more in general, current is made to flow through the bridge detector 601). The processor, (preferably in response to detection of the changeover of the power supply 4 from the second to the first operating configuration) acquires the measurement parameter (for example, the resistance value provided by the bridge detector 601 or a data item processed from this value).

The processor 5 drives the transmitter of the screw to transmit the measurement parameter to the outside, preferably to the reading device 8. In an example embodiment, the processor 5 detects a changeover of the power supply 4 from the first to the second operating configuration caused by an interruption in the power supply by the reading device 8) and, as a result, that is, in response to such detection, drives the changeover switch 404 energized by the power supply 4 to generate a variable electric current in the coil 3, this current (for example, a square wave at the predetermined resonance frequency) represents the measurement parameter.

That way, the screw 1 generates a wireless measurement signal which is detected by the receiver 802 of the reading device 8 by means of an induced current in the winding 801 of the reading device 8 magnetically coupled to the coil 3 of the screw 1.

The reading device 8 acquires the measurement parameter by processing the measurement signal received from the screw 1, stores it in the memory and/or displays it on the screen 807.

## Claims

1. A screw (1) comprising:
- a threaded shank (101) extending along a longitudinal axis (103);
- a head (102) engageable by a tightening tool to tighten the screw;
- an extensometer (106) connected to the shank (101), to measure a measurement parameter representing a tightening force of the screw, **characterized in that** it comprises a coil (3), a power supply (4), a microprocessor (5) and a transmitter, all located in a housing (107) made in the head (102), wherein the power supply (4) is connected to the coil (3), to receive electrical energy by electromagnetic induction through a contactless transmission line (7), and is connected to the microprocessor (5) and to the extensometer (106) to supply them with electric power, and wherein the microprocessor (5) is connected to the extensometer (106) to receive the measurement parameter measured by the extensometer and is connected to the transmitter to transmit the measurement parameter to the outside of the screw through a wireless measurement signal.

2. The screw according to claim 1, wherein the coil (3) is a coil printed on a multilayer substrate.

3. The screw according to claim 1 or 2, wherein the power supply (4) and the microprocessor (5) are integrated in an electronic card (201) which is located between the coil (3) and the extensometer (106) along the longitudinal axis (103).

4. The screw according to any one of the preceding claims, comprising a conditioning module (6), located in the housing (107), interposed between the extensometer (106) and the microprocessor (5) and having a circuit which acts in conjunction with the extensometer (106) to define a bridge detector (601), and an amplifier stage (602) interposed between the bridge detector (601) and the microprocessor (5).

5. The screw according to any one of the preceding claims, comprising a capacitor connected in parallel to the coil (3) to define therewith a resonant circuit at a predetermined frequency.

6. The screw according to any one of the preceding claims, wherein the power supply (4) has a first and a second operating configuration, the power supply (4) being in the first operating configuration when current is flowing in the coil (3), induced by a magnetic field, and in the second operating configuration when there are no currents induced by magnetic fields in the coil (3), and wherein the microprocessor (5) is programmed to read the value of the tightening force and to transmit the wireless measurement signal in response to a switch of the power supply (4) from the second to the first operating configuration.

7. The screw according to any one of the preceding claims, wherein the microprocessor (5) is programmed to generate a drive signal for driving the transmitter, and wherein the transmitter is configured to generate in the coil (3), in response to the drive signal received from the microprocessor (5), a transmission current which is variable according to a curve representing the measurement parameter measured, in order to generate the wireless measurement signal by electromagnetic induction through the coil (3).

8. The screw according to any one of the preceding claims, wherein the power supply (4) comprises:
- a first power supply element (401) connected to the coil (3) to receive a first supply current and connected to the microprocessor (5) to power it;
- a second power supply element (402) connected to the coil (3) to receive a second supply current, distinct from the first supply current, and connected to the coil (3) through a changeover switch (404) acting in conjunction with the second power supply element (402) to define the transmitter, to transmit to the coil (3) a transmission current which is variable according to a curve representing the measurement parameter measured, in order to generate the wireless measurement signal by electromagnetic induction through the coil (3),
wherein the microprocessor (5) is connected to the changeover switch (404) to drive it through a drive signal.

9. The screw according to claim 8, wherein the changeover switch (404) is movable, as a function of the drive signal, between:
- a first operating state, in which it connects the coil (3) to the second power supply element (401);
- a second operating state in which it connects the coil (3) to earth;
- and a third operating state in which it disconnects the coil (3) both from the second power supply element (402) and from earth and leaves it floating.

10. A wireless system for reading a tightening force of a screw (1) applied to a structure, comprising:
- an extensometer (106) connected to the shank of the screw (1), configured to measure a measurement parameter representing a tightening force of the screw;
- a coil (3), a power supply (4), a microprocessor (5) and a transmitter, all located in a housing (107) made in the screw (1), wherein the power supply (4) is connected to the coil (3), to receive electrical energy and to the microprocessor (5) and the extensometer (106) to supply them with electric power, and wherein the microprocessor (5) is connected to the extensometer (106) to receive the measurement parameter measured by the extensometer and is connected to the transmitter to transmit the measurement parameter to the outside of the screw (1) through a wireless measurement signal;
- a reading device (8) having a receiver (802), an electrical energy source (803), a processor (804) and a winding (801), wherein the processor (804) is programmed to generate a primary supply current in the winding (801) to generate a magnetic field and induce a secondary supply current in the coil (3) of the screw (1), thereby transmitting electrical energy to the power supply (4) of the screw (1) through a contactless transmission line (7), and wherein the receiver (802) is configured to detect the wireless measurement signal generated by the microprocessor (5) of the screw (1) and the processor (804) of the reading device (8) is programmed to process the wireless measurement signal to acquire the measurement parameter.

11. A method for reading a tightening force of a screw (1) applied to a structure, comprising a step of measuring a measurement parameter representing a tightening force of the screw, by means of an extensometer (106) connected to a shank (101) of the screw (1),
**characterized in that** it comprises the following steps:
- preparing a reading device (8) having a receiver (802), an electrical energy source (803), a processor (804) and a winding (801);
- preparing, in a housing (107) made in the screw (1), a coil (3), a power supply (4), a microprocessor (5) and a transmitter;
- moving the reading device (8) close to the screw (1) until the winding (801) of the reading device (8) is magnetically coupled to the coil (3) of the screw (1);
- electrically energizing the power supply (4) and the microprocessor (5) of the screw (1), by transmitting electrical energy from the reading device (8) through the contactless transmission line defined by the winding (801) of the reading device (8) magnetically coupled to the coil (3) of the screw (1);
- acquiring, by means of the microprocessor (5) of the screw, the measurement parameter measured by the extensometer (106);
- transmitting the measurement parameter to the receiver (802) of the reading device (8) through a wireless measurement signal by the transmitter of the screw (1) driven by the microprocessor (5);
- processing the wireless measurement signal by means of the processor (804) of the reading device (8) in order to acquire the measurement parameter.

12. The method according to claim 11, wherein the step of acquiring the measurement parameter measured by the extensometer (106) is started by the microprocessor (5) of the screw (1) when the microprocessor detects the electrical powering step.

13. The method according to claim 11 or 12, wherein the step of transmitting the measurement parameter through a wireless measurement signal from the microprocessor (5) of the screw (1) to the reading device (8), occurs, alternatively:
i) through the contactless transmission line (7) defined by the winding (801) of the reading device (8) magnetically coupled to the coil (3) of the screw (1) during a pause in the step of electrically energizing the power supply (4) of the screw (1) by means of the reading device (8);
ii) through a further contactless transmission line at least partly concurrently with the step of electrically energizing the power supply (4) of the screw (1) by means of the reading device (8).

14. A method for processing a screw (1) having an elongate threaded shank (101) extending along a longitudinal axis (103) and a head (102) which can be engaged by a tightening tool for tightening the screw (1), wherein the method comprises a step of stably connecting an extensometer (106), designed to measure a measurement parameter representing a tightening force of the screw, to the shank (101) of the screw (1),
the method being **characterized in that** it comprises the following steps:
- removing material from the head (102) of the screw (1) to form a housing (107) accessible from the outside lengthways from a direction opposite the shank (101);
- placing a coil (3), a power supply (4), a microprocessor (5) and a transmitter inside the housing (107);
- electrically connecting the coil (3) to the power supply (4), the power supply (4) to the microprocessor (5) and to the extensometer (106), and the microprocessor (5) to the extensometer (106);
- programming the microprocessor (5) to instruct it to transmit the measurement parameter to the outside of the screw (1) through a wireless measurement signal.

15. The processing method according to claim 14, wherein the step of connecting the extensometer (106) to the shank of the screw comprises inserting the extensometer (106) in a longitudinal cavity (104) made in the shank (101) of the screw (1).

## Patentansprüche

1. Schraube (1), umfassend:
- einen Gewindeschaft (101), der sich entlang einer Längsachse (103) erstreckt;
- einen Kopf (102), in den ein Anziehwerkzeug zum Anziehen der Schraube in Eingriff gelangen kann;
- ein Dehnungsmessgerät (106), das mit dem Schaft (101) verbunden ist, um einen Messparameter zu messen, der eine Anzugskraft der Schraube darstellt, **dadurch gekennzeichnet, dass** sie eine Spule (3), eine Stromversorgung (4), einen Mikroprozessor (5) und einen Sender umfasst, die alle in einem Gehäuse (107) untergebracht sind, das im Kopf (102) ausgebildet ist, wobei die Stromversorgung (4) mit der Spule (3) verbunden ist, um elektrische Energie durch elektromagnetische Induktion mittels einer berührungslosen Übertragungsleitung (7) zu empfangen, und mit dem Mikroprozessor (5) und dem Dehnungsmessgerät (106) verbunden ist, um diese mit Strom zu versorgen, wobei der Mikroprozessor (5) mit dem Dehnungsmessgerät (106) verbunden ist, um den vom Dehnungsmessgerät gemessenen Messparameter zu empfangen, und mit dem Sender verbunden ist, um den Messparameter über ein drahtloses Messsignal an die Außenseite der Schraube zu übermitteln.

2. Schraube nach Anspruch 1, wobei die Spule (3) eine auf einem mehrschichtigen Substrat aufgedruckte Spule ist.

3. Schraube nach Anspruch 1 oder 2, wobei die Stromversorgung (4) und der Mikroprozessor (5) in eine Elektronikplatine (201) integriert sind, die sich zwischen der Spule (3) und dem Dehnungsmessgerät (106) entlang der Längsachse (103) befindet.

4. Schraube nach einem der vorhergehenden Ansprüche, umfassend ein Aufbereitungsmodul (6), das sich im Gehäuse (107) befindet, eingesetzt zwischen dem Dehnungsmessgerät (106) und dem Mikroprozessor (5) und aufweisend einen Kreislauf, der in Verbindung mit dem Dehnungsmessgerät (106) agiert, um einen Brückendetektor (601) zu definieren, und eine Verstärkungsstufe (602), eingesetzt zwischen dem Brückendetektor (601) und dem Mikroprozessor (5).

5. Schraube nach einem der vorhergehenden Ansprüche, umfassend auch einen Kondensator, der in Parallelschaltung mit der Spule (3) verbunden ist, um damit einen resonanten Kreislauf bei einer vorgegebenen Frequenz zu definieren.

6. Schraube nach einem der vorhergehenden Ansprüche, wobei die Stromversorgung (4) eine erste und eine zweite Betriebskonfiguration aufweist, wobei die Stromversorgung (4) in der ersten Betriebskonfiguration ist, wenn der Strom durch die Spule (3) fließt, induziert von einem Magnetfeld, und in der zweiten Betriebskonfiguration ist, wenn keine durch Magnetfelder induzierte Ströme durch die Spule (3) fließen, und wobei der Mikroprozessor (5) programmiert ist, um den Wert der Anzugskraft abzulesen und das drahtlose Messsignal als Reaktion auf eine Umschaltung der Stromversorgung (4) von der zweiten in die erste Betriebskonfiguration zu übermitteln.

7. Schraube nach einem der vorhergehenden Ansprüche, wobei der Mikroprozessor (5) programmiert ist, um ein Antriebssignal für den Antrieb des Senders zu generieren, und wobei der Sender ausgelegt ist, um in der Spule (3) als Reaktion auf das vom Mikroprozessor (5) empfangene Antriebssignal einen Übertragungsstrom zu generieren, der gemäß einer Kurve variabel ist, die den gemessenen Messparameter darstellt, um das drahtlose Messsignal durch elektromagnetische Induktion durch die Spule (3) zu generieren.

8. Schraube nach einem der vorhergehenden Ansprüche, wobei die Stromversorgung (4) umfasst:
- ein erstes Stromversorgungselement (401), das mit der Spule (3) verbunden ist, um einen ersten Versorgungsstrom zu empfangen, und das mit dem Mikroprozessor (5) verbunden ist, um diesen mit Strom zu versorgen;
- ein zweites Stromversorgungselement (402), das mit der Spule (3) verbunden ist, um einen zweiten Versorgungsstrom zu empfangen, der verschieden vom ersten Versorgungsstrom ist, und das mit der Spule (3) durch einen Umschalter (404) verbunden ist, der in Verbindung mit dem zweiten Stromversorgungselement (402) wirkt, um den Sender zu definieren, um einen Übertragungsstrom an die Spule (3) zu übermitteln, der gemäß einer Kurve variabel ist, die den gemessenen Messparameter darstellt, um das drahtlose Messsignal durch elektromagnetische Induktion durch die Spule (3) zu generieren,
wobei der Mikroprozessor (5) mit dem Umschalter (404) verbunden ist, um diesen durch ein Antriebssignal anzutreiben.

9. Schraube nach Anspruch 8, wobei der Umschalter (404) als eine Funktion des Antriebssignals bewegbar ist zwischen
- einem ersten Betriebszustand, in dem er die Spule (3) mit dem zweiten Stromversorgungselement (401) verbindet;
- einem zweiten Betriebszustand, in dem er die Spule (3) mit der Erde verbindet,
- und einem dritten Betriebszustand, in dem er die Spule (3) sowohl vom zweiten Stromversorgungselement (402) als auch von der Erde trennt und sie in Schwimmstellung lässt.

10. Drahtloses System zum Ablesen einer Anzugskraft einer Schraube (1), die an einer Struktur angebracht ist, umfassend:
- ein Dehnungsmessgerät (106), das mit einem Schaft der Schraube (1) verbunden ist, ausgelegt, um einen Messparameter zu messen, der eine Anzugskraft der Schraube darstellt;
- eine Spule (3), eine Stromversorgung (4), einen Mikroprozessor (5) und einen Sender, die alle in einem Gehäuse (107) untergebracht sind, das in der Schraube (1) ausgebildet ist, wobei die Stromversorgung (4) mit der Spule (3) verbunden ist, um elektrische Energie zu empfangen, und mit dem Mikroprozessor (5) und dem Dehnungsmessgerät (106), um diese mit Strom zu versorgen, und wobei der Mikroprozessor (5) mit dem Dehnungsmessgerät (106) verbunden ist, um den vom Dehnungsmessgerät gemessenen Messparameter zu empfangen, und mit dem Sender verbunden ist, um den Messparameter außerhalb der Schraube (1) über ein drahtloses Messsignal zu übermitteln;
- eine Lesevorrichtung (8), aufweisend einen Empfänger (802), eine elektrische Energiequelle (803), einen Prozessor (804) und eine Wicklung (801), wobei der Prozessor (804) programmiert ist, um einen Hauptversorgungsstrom in der Wicklung (801) zu generieren, um ein Magnetfeld zu erzeugen, und um einen Hilfsversorgungsstrom in der Spule (3) der Schraube (1) zu induzieren, wodurch elektrische Energie an die Stromversorgung (4) der Schraube (1) durch eine berührungslose Übertragungsleitung (7) übertragen wird, und wobei der Empfänger (802) ausgelegt ist, um das drahtlose Messsignal, das durch den Mikroprozessor (5) der Schraube (1) generiert wird, zu erfassen, und der Prozessor (804) der Lesevorrichtung (8) programmiert ist, um das drahtlose Messsignal zu verarbeiten, um den Messparameter zu erfassen.

11. Verfahren zum Ablesen einer Anzugskraft einer Schraube (1), die an einer Struktur angebracht ist, umfassend einen Schritt zum Messen eines Messparameters, darstellend eine Anzugskraft der Schraube, mittels eines Dehnungsmessgeräts (106), das mit einem Schaft (101) der Schraube (1) verbunden ist, **dadurch gekennzeichnet, dass** es die folgenden Schritte umfasst:
- Vorbereiten einer Lesevorrichtung (8), aufweisend einen Empfänger (802), eine elektrische Energiequelle (803), einen Prozessor (804) und eine Wicklung (801);
- Vorbereiten in einem in der Schraube (1) ausgebildeten Gehäuse (107) einer Spule (3), einer Stromversorgung (4), eines Mikroprozessors (5) und eines Senders;
- Bewegen der Lesevorrichtung (8) in die Nähe der Schraube (1), bis die Wicklung (801) der Lesevorrichtung (8) magnetisch mit der Spule (3) der Schraube (1) gekuppelt ist;
- Versorgen der Stromversorgung (4) und des Mikroprozessors (5) der Schraube (1) mit elektrischer Energie, indem elektrische Energie von der Lesevorrichtung (8) durch die berührungslose Übertragungslinie übertragen wird, definiert durch die Wicklung (801) der Lesevorrichtung (8), magnetisch gekuppelt mit der Spule (3) der Schraube (1);
- Erfassen des vom Dehnungsmessgerät (106) gemessenen Messparameters mittels des Mikroprozessors (5) der Schraube;
- Übertragen des Messparameters zum Empfänger (802) der Lesevorrichtung (8) über ein drahtloses Messsignal durch den Sender der Schraube (1), angetrieben durch den Mikroprozessor (5);
- Verarbeiten des drahtlosen Messsignals mittels des Prozessors (804) der Lesevorrichtung (8), um den Messparameter zu erfassen.

12. Verfahren nach Anspruch 11, wobei der Schritt zum Erfassen des vom Dehnungsmessgerät (106) gemessenen Messparameters vom Mikroprozessor (5) der Schraube (1) gestartet wird, wenn der Mikroprozessor den Schritt für die elektrische Versorgung erfasst.

13. Verfahren nach Anspruch 11 oder 12, wobei der Schritt zum Übertragen des Messparameters durch ein drahtloses Messsignal vom Mikroprozessor (5) der Schraube (1) an die Lesevorrichtung (8) stattfindet entweder
i) durch die berührungslose Übertragungsleitung (7), definiert von der Wicklung (801) der Lesevorrichtung (8), die magnetisch mit der Spule (3) der Schraube (1) gekuppelt ist, während einer Pause des Schritts zur elektrischen Energieversorgung der Stromversorgung (4) der Schraube (1) durch die Lesevorrichtung (8), oder
ii) durch eine weitere berührungslose Übertragungsleitung, mindestens teilweise gleichzeitig mit dem Schritt zur elektrischen Energieversorgung der Stromversorgung (4) der Schraube (1) durch die Lesevorrichtung (8).

14. Verfahren zur Bearbeitung einer Schraube (1), aufweisend einen langgezogenen Gewindeschaft (101), der sich entlang einer Längsachse (103) erstreckt, und einen Kopf (102), in den ein Anzugswerkzeug zum Anziehen der Schraube (1) in Eingriff gelangen kann, wobei das Verfahren einen Schritt zum stabilen Verbinden eines Dehnungsmessgeräts (106) umfasst, ausgestaltet, um einen Messparameter zu messen, der eine Anzugskraft der Schraube darstellt, mit dem Schaft (101) der Schraube (1),
wobei das Verfahren **dadurch gekennzeichnet ist, dass** es folgende Schritte umfasst:
- Entfernen von Material aus dem Kopf (102) der Schraube (1), um ein Gehäuse (107) zu bilden, das längs von außen von einer Richtung zugänglich ist, die dem Schaft (101) entgegengesetzt ist;
- Platzieren einer Spule (3), einer Stromversorgung (4), eines Mikroprozessors (5) und eines Senders im Gehäuse (107);
- elektrisches Anschließen der Spule (3) an die Stromversorgung (4), der Stromversorgung (4) an den Mikroprozessor (5) und das Dehnungsmessgerät (106) und des Mikroprozessors (5) an das Dehnungsmessgerät (106);
- Programmieren des Mikroprozessors (5), um diesen anzuweisen, den Messparameter außerhalb der Schraube (1) über ein drahtloses Messsignal zu übertragen.

15. Verfahren nach Anspruch 14, wobei der Schritt zum Verbinden des Dehnungsmessgeräts (106) mit dem Schaft der Schraube das Einfügen des Dehnungsmessgeräts (106) in einen Längshohlraum (104) umfasst, der im Schaft (101) der Schraube (1) ausgebildet ist.

## Revendications

1. Vis (1) comprenant :
- une tige filetée (101) se prolongeant le long d'un axe longitudinal (103) ;
- une tête (102) pouvant être mise en prise par un outil de serrage pour serrer la vis ;
- un extensomètre (106) relié à la tige (101) pour mesurer un paramètre de mesure représentant une force de serrage de la vis, **caractérisée en ce qu'**elle comprend une bobine (3), un bloc d'alimentation (4), un microprocesseur (5) et un transmetteur, tous situés dans un logement (107) réalisé dans la tête (102), dans laquelle le bloc d'alimentation (4) est relié à la bobine (3) pour recevoir de l'énergie électrique par induction électromagnétique à travers une ligne de transmission (7) sans contact, et est reliée au microprocesseur (5) et à l'extensomètre (106) pour leur fournir de l'énergie électrique, et dans laquelle le microprocesseur (5) est relié à l'extensomètre (106) pour recevoir le paramètre de mesure mesuré par l'extensomètre et est relié au transmetteur pour transmettre le paramètre de mesure à l'extérieur de la vis à travers un signal de mesure sans fil.

2. Vis selon la revendication 1, dans laquelle la bobine (3) est une bobine imprimée sur un substrat multicouche.

3. Vis selon la revendication 1 ou 2, dans laquelle le bloc d'alimentation (4) et le microprocesseur (5) sont intégrés dans une carte électronique (201) étant située entre la bobine (3) et l'extensomètre (106) le long de l'axe longitudinal (103).

4. Vis selon l'une quelconque des revendications précédentes, comprenant un module de conditionnement (6), situé dans le logement (107), interposé entre l'extensomètre (106) et le microprocesseur (5) et comportant un circuit agissant conjointement avec l'extensomètre (106) pour définir un détecteur de pont (601), et un stade d'amplification (602) interposé entre le détecteur de pont (601) et le microprocesseur (5) .

5. Vis selon l'une quelconque des revendications précédentes, comprenant un condensateur relié en parallèle à la bobine (3) pour définir en son sein un circuit résonnant à une fréquence prédéterminée.

6. Vis selon l'une quelconque des revendications précédentes, dans laquelle le bloc d'alimentation (4) possède une première et une seconde configuration de fonctionnement, le bloc d'alimentation (4) étant dans la première configuration de fonctionnement lorsque le courant s'écoule dans la bobine (3), induit par un champ magnétique, et dans la seconde configuration de fonctionnement lorsqu'il n'y a pas de courant induit par des champs magnétiques dans la bobine (3), et dans laquelle le microprocesseur (5) est programmé pour lire la valeur de la force de serrage et pour transmettre le signal de mesure sans fil en réponse à une commutation du bloc d'alimentation (4) de la seconde à la première configuration de fonctionnement.

7. Vis selon l'une quelconque des revendications précédentes, dans laquelle le microprocesseur (5) est programmé pour générer un signal d'actionnement pour actionner le transmetteur, et dans laquelle le transmetteur est configuré pour générer dans la bobine (3), en réponse au signal d'actionnement reçu du microprocesseur (5), un courant de transmission étant variable selon une courbe représentant le paramètre de mesure mesuré afin de générer le signal de mesure sans fil par induction électromagnétique à travers la bobine (3) .

8. Vis selon l'une quelconque des revendications précédentes, dans laquelle le bloc d'alimentation (4) comprend :
- un premier élément (401) de bloc d'alimentation relié à la bobine (3), pour recevoir un premier courant d'alimentation, et relié au microprocesseur (5) pour l'alimenter ;
- un second élément (402) de bloc d'alimentation relié à la bobine (3) pour recevoir un second courant d'alimentation, distinct du premier courant d'alimentation, et relié à la bobine (3) par un commutateur (404) agissant conjointement avec le second élément (402) de bloc d'alimentation pour définir le transmetteur, pour transmettre à la bobine (3) un courant de transmission étant variable selon une courbe représentant le paramètre de mesure mesuré, afin de générer le signal de mesure sans fil par induction électromagnétique à travers la bobine (3),
dans laquelle le microprocesseur (5) est relié au commutateur (404) pour l'actionner à travers un signal d'actionnement.

9. Vis selon la revendication 8, dans laquelle le commutateur (404) est mobile, en fonction du signal d'actionnement, entre :
- un premier état de fonctionnement, dans lequel il relie la bobine (3) au second élément (401) de bloc d'alimentation ;
- un second état de fonctionnement dans lequel il relie la bobine (3) à la terre ;
- et un troisième état de fonctionnement dans lequel il déconnecte la bobine (3) du second élément (402) de bloc d'alimentation et de la terre et la laisse flottante.

10. Système sans fil pour la lecture d'une force de serrage d'une vis (1) appliquée à une structure, comprenant :
- un extensomètre (106), relié à la tige de la vis (1), configuré pour mesurer un paramètre de mesure représentant une force de serrage de la vis ;
- une bobine (3), un bloc d'alimentation (4), un microprocesseur (5) et un transmetteur, tous situés dans un logement (107) réalisé dans la vis (1), dans lequel le bloc d'alimentation (4) est reliée à la bobine (3) pour recevoir de l'énergie électrique et au microprocesseur (5) et à l'extensomètre (106) pour leur fournir de l'énergie électrique, et dans lequel le microprocesseur (5) est relié à l'extensomètre (106) pour recevoir le paramètre de mesure mesuré par l'extensomètre et est relié au transmetteur pour transmettre le paramètre de mesure à l'extérieur de la vis (1) à travers un signal de mesure sans fil ;
- un dispositif de lecture (8) comportant un récepteur (802), une source d'énergie électrique (803), un processeur (804) et un enroulement (801), dans lequel le processeur (804) est programmé pour générer un courant d'alimentation primaire dans l'enroulement (801) pour générer un champ magnétique et induire un courant d'alimentation secondaire dans la bobine (3) de la vis (1), pour ainsi transmettre l'énergie électrique au bloc d'alimentation (4) de la vis (1) à travers une ligne de transmission (7) sans contact, et dans lequel le récepteur (802) est configuré pour détecter le signal de mesure sans fil généré par le microprocesseur (5) de la vis (1), et le processeur (804) du dispositif de lecture (8) est programmé pour traiter le signal de mesure sans fil pour acquérir le paramètre de mesure.

11. Procédé de lecture d'une force de serrage d'une vis (1) appliquée à une structure, comprenant une étape consistant à mesurer un paramètre de mesure représentant une force de serrage de la vis au moyen d'un extensomètre (106) relié à une tige (101) de la vis (1), **caractérisé en ce qu'**il comprend les étapes suivantes :
- préparer un dispositif de lecture (8) comportant un récepteur (802), une source d'énergie électrique (803), un processeur (804) et un enroulement (801) ;
- préparer, dans un logement (107) réalisé dans la vis (1), une bobine (3), un bloc d'alimentation (4), un microprocesseur (5) et un transmetteur ;
- déplacer le dispositif de lecture (8) près de la vis (1) jusqu'à ce que l'enroulement (801) du dispositif de lecture (8) soit magnétiquement couplé à la bobine (3) de la vis (1) ;
- alimenter électriquement le bloc d'alimentation (4) et le microprocesseur (5) de la vis (1) en transmettant de l'énergie électrique à partir du dispositif de lecture (8) à travers la ligne de transmission sans contact définie par l'enroulement (801) du dispositif de lecture (8) magnétiquement couplé à la bobine (3) de la vis (1) ;
- acquérir, au moyen du microprocesseur (5) de la vis, le paramètre de mesure mesuré par l'extensomètre (106) ;
- transmettre le paramètre de mesure au récepteur (802) du dispositif de lecture (8) à travers le signal de mesure sans fil par le transmetteur de la vis (1) actionné par le microprocesseur (5) ;
- traiter le signal de mesure sans fil au moyen du processeur (804) du dispositif de lecture (8) afin d'acquérir le paramètre de mesure.

12. Procédé selon la revendication 11, dans lequel l'étape consistant à acquérir le paramètre de mesure mesuré par l'extensomètre (106) est commencée par le microprocesseur (5) de la vis (1) lorsque le microprocesseur détecte l'étape d'alimentation électrique.

13. Procédé selon la revendication 11 ou 12, dans lequel l'étape consistant à transmettre le paramètre de mesure, à travers un signal de mesure sans fil à partir du microprocesseur (5) de la vis (1) au dispositif de lecture (8), se déroule alternativement :
i) à travers la ligne de transmission (7) sans contact définie par l'enroulement (801) du dispositif de lecture (8) magnétiquement couplé à la bobine (3) de la vis (1) durant une pause dans l'étape consistant à alimenter électriquement le bloc d'alimentation (4) de la vis (1) au moyen du dispositif de lecture (8) ;
ii) à travers une ligne de transmission sans contact supplémentaire au moins en partie simultanément avec l'étape consistant à alimenter électriquement le bloc d'alimentation (4) de la vis (1) au moyen du dispositif de lecture (8).

14. Procédé consistant à usiner une vis (1) comportant une tige filetée (101) allongée se prolongeant le long d'un axe longitudinal (103) et une tête (102) pouvant se mettre en prise par un outil de serrage pour serrer la vis (1), dans lequel le procédé comprend une étape consistant à relier stablement un extensomètre (106) conçu pour mesurer un paramètre de mesure représentant une force de serrage de la vis par rapport à la tige (101) de la vis (1),
le procédé étant **caractérisé en ce qu'**il comprend les étapes suivantes :
- retirer du matériau de la tête (102) de la vis (1) pour former un logement (107) accessible longitudinalement de l'extérieur à partir d'une direction opposée à la tige (101) ;
- placer une bobine (3), un bloc d'alimentation (4), un microprocesseur (5) et un transmetteur à l'intérieur du logement (107) ;
- raccorder électriquement la bobine (3) au bloc d'alimentation (4), le bloc d'alimentation (4) au microprocesseur (5) et à l'extensomètre (106), et le microprocesseur (5) à l'extensomètre (106) ;
- programmer le microprocesseur (5) pour le charger de transmettre le paramètre de mesure vers l'extérieur de la vis (1) à travers un signal de mesure sans fil.

15. Procédé d'usinage selon la revendication 14, dans lequel l'étape consistant à raccorder l'extensomètre (106) à la tige de la vis comprend l'introduction de l'extensomètre (106) dans une cavité longitudinale (104) réalisée dans la tige (101) de la vis (1).
